# EUROPÄISCHE PATENTSCHRIFT

(11) **EP 3 698 616 B1**
(45) Veröffentlichungstag und Bekanntmachung des Hinweises auf die Patenterteilung: **27.03.2024**
(21) Anmeldenummer: 20157112.2
(22) Anmeldetag: 13.02.2020
(51) Int. Cl.: A01C 7/20, A01C 5/06

(54) **SÄSCHARANORDNUNG MIT DRUCKREGELBARER DRUCKROLLE**
DRILL COULTER ASSEMBLY WITH PRESSURE ADJUSTABLE PRESSURE ROLLER
AGENCEMENT DE SOC POURVU DE ROULEAU DE PRESSION À RÉGULATION DE LA PRESSION

(30) Priorität: 19.02.2019 DE 202019100914 U
(43) Veröffentlichungstag der Anmeldung: 26.08.2020
(73) Patentinhaber: PÖTTINGER Landtechnik GmbH, 4710 Grieskirchen (AT)
(72) Erfinder: Preimeß, Hans-Jörg, 4710 Grieskirchen (AT); Stadlbauer, Franz, 4710 Grieskirchen (AT)
(74) Vertreter: Thoma, Michael

(56) Entgegenhaltungen:
- EP-A2- 0 372 901
- CA-A1- 2 549 371
- US-A1- 2016 316 609

## Beschreibung

Die vorliegende Erfindung betrifft eine Säscharanordnung, insbesondere an einer Sämaschine.

Um Saatgut zielgerichtet in einen Boden einzubringen sind Sämaschinen mit Säscharen, bspw. in Form von Scheibenscharen oder Zinkenscharen vorgesehen, um damit in einem Ackerboden eine Furche zu bilden, in die dann ein Saatgut eingelegt werden kann. Eine Sämaschine schleppt dabei typischerweise ein Scharsystem über einen zu besäenden Ackerboden, mit dem gleichzeitig mehrere parallel zur Fahrtrichtung liegende Furchen gebildet werden können, in die das Saatgut eingebracht wird. Zum Bilden einer solchen Furche im Ackerboden sind mehrere Säscharen vorgesehen. Dabei ist in der Regel jedes Säschar an einem Träger angeordnet, der von einer quer zur Fahrtrichtung angeordneten Querachse eines Scharrahmens abgeht. Zudem weist ein solcher Säscharträger ein Stützrad oder eine Druckrolle auf, die zu dem Säschar in Fahrtrichtung nachgeordnet angeordnet ist. Diese Druckrolle hat dabei die Aufgabe, die durch das Säschar gebildete Furche (auch: Sährille), in die das Saatgut gezielt eingelegt worden ist, zu schließen und mittels der Druckrolle überfahrenen Boden zu verdichten. Darüber hinaus dient die Druckrolle auch zum Abstützen des Säscharträgers gegenüber dem Boden, so dass die Arbeitstiefe der Säschar auch durch die Druckrolle einstellbar ist.

Durch das Verschließen und das Verdichten der mit dem Saatgut versehenen Furche wird ein guter Kontakt zwischen Saat und Ackerboden sichergestellt, was die Keimwahrscheinlichkeit der ausgebrachten Saat erhöht.

Das Säschar und die Druckrolle sind so an dem von dem Scharrahmen abgehenden Säscharträger angeordnet, dass das Säschar in einem Arbeitsbetrieb in den Ackerboden mit einer gewünschten Tiefe eindringt, wobei die nachgeordnete Druckrolle die durch das Säschar gebildete Furche überfährt und teilweise oder vollständig schließt.

Dabei ist der Säscharträger typischerweise derart an dem Scharrahmen angeordnet, dass die auf den Boden wirkende Kraft von Säschar und Druckrolle für ein zufriedenstellendes Sähergebnis ausreicht, jedoch bei einem Auftreffen des Säschars auf einen Stein oder dergleichen auch ein Nachgeben erlaubt, um eine Beschädigung des Säschars zu verhindern.

Eine typische Vorrichtung aus dem Stand der Technik ergibt sich dabei bspw. aus der DE 20 101 006 169, die ein Säschar mit einer dazu nachgelagerten Druckrolle in einer Parallelogrammführung zeigt. Die Druckrolle ist dabei unabhängig von dem Säschar so einstellbar, dass sie nur mit einer vorbestimmten Kraft belastet wird.

Problematisch ist jedoch, dass bei sämtlichen aus dem Stand der Technik bekannten Umsetzungen die Druckrolle im Verhältnis zum Säschar (Säscheibe) starr ist, bzw. durch einen Parallelogrammlenker zwangsgeführt angelenkt ist. Durch diese "starren" Anlenksysteme entsteht eine starre, mechanisch fixierte Anlenkung der Druckrolle zum Säschar. Ziel des modernen Ackerbaues ist es jedoch ein Säscharsystem zu schaffen, das die Einhaltung der Ablagetiefe und eine gezielte Regelung der Anpresskraft an der Druckrolle ermöglicht.

Aus der Schrift CA 2 549 371 A1 ist ein Bodenbearbeitungsgerät bekannt, bei dem eine Bodendruckrolle dem Bodenbearbeitungswerkzeug nachläuft und mittels einer Parallelogrammlenker-Aufhängung angelenkt ist. Mittels eines elektronischen Sensors wird dabei die durch den Werkzeugeingriff im Boden induzierte Reaktionskraft im Aufhängungsgestell gemessen, um die Bodenandruckkraft gegebenenfalls anzupassen.

Weitere Bodenbearbeitungsgeräte, bei denen die vom Werkzeugeingriff im Boden induzierten Reaktionskräfte gemessen werden, zeigen die Schriften EP 0 372 901 A1 und US 2016/0316609 A1.

Da im praktischen Einsatz der Schardruck durch einen oder zwei zentrale Schardruckzylinder initiiert wird, teilt sich diese Gesamtkraft einsatzspezifisch auf das Säschar und die Andruckrolle auf. Bei Umsetzungen nach dem Stand der Technik kann anhand der zentralen Schardruckkraft nicht gesagt werden, wieviel davon jeweils vom Säschar und der Andruckrolle übernommen wird, so dass eine vorteilhafte Regelung bzw. Steuerung der Anpresskraft durch die Druckrolle nicht möglich ist.

Es ist demnach das Ziel der vorliegenden Erfindung eine verbesserte Säscharanordnung, insbesondere an einer Sämaschine zu schaffen, die die oben aufgeführten Nachteile abmildert oder überwindet.

Dies gelingt mit der Vorrichtung, welche sämtliche Merkmale des Anspruchs 1 aufweist oder mit dem Verfahren, das die Merkmale des Anspruchs 9 zeigt. Vorteilhafte Ausgestaltungen der Erfindung sind dabei in den abhängigen Ansprüchen wiedergegeben.

Nach der Erfindung umfasst die Säscharanordnung, insbesondere an einer Sämaschine, mindestens ein Säschar zum Bilden einer Furche in einem Ackerboden, mindestens eine Druckrolle, die in Arbeitsrichtung der Säscharanordnung hinter dem Säschar angeordnet und dazu ausgelegt ist, mit Druck auf dem Ackerboden abzurollen, und einen Säscharträger, der von einem Scharrahmen abgeht und mit dem Säschar und der Druckrolle verbunden ist, wobei die Druckrolle mittels einer Parallelogrammlenkung verstellbar gegenüber dem Säschar gehaltert ist. Die Erfindung ist gekennzeichnet durch ein Aktuatorelement zum Verstellen der Parallelogrammlenkung und zum Ausüben einer hieraus resultierenden Bewegung der Druckrolle gegenüber dem Säschar, und eine Kraftbestimmungseinrichtung zum Erfassen der auf das Aktuatorelement einwirkenden Kraft.

Dabei kann vorgesehen sein, dass das Aktuatorelement einen Teil der Parallelogrammlenkung ist, vorzugsweise die dem Scharrahmen zugewandte Verbindung von oberen und unteren Parallelogrammlenkern.

Dabei kann also vorgesehen sein, dass nur die Druckrolle und nicht auch der Säscharträger parallelogrammgeführt ist, so dass nur die Druckrolle gegenüber dem restlichen Säschar und einem Scharrahmen im Parallelogramm geführt ist. Hieraus ergibt sich ein verbesserter Nachlaufeffekt des Säschars gegenüber dem Säschartäger (der auch als Drillhebel bezeichnet wird).

Zudem ist nach der Erfindung vorgesehen, dass die Druckrolle weder starr zum Säschar noch durch eine Parallelogrammführung zwangsgeführt ist. Vielmehr ist es mithilfe des Aktuatorelements möglich, die Anpresskraft der Druckrolle auf dem Ackerboden zu variieren und auch einen Rückschluss auf die Anpresskraft der Druckrolle auf den Boden zu erhalten. Dies gelingt unter Heranziehung der auf das Aktuatorelement einwirkenden Kraft bei Betrachtung des gesamten auf den Scharrahmen ausgeübten Schardrucks, sowie die Verstellbarkeit des Parallelogramms durch den Aktuator, so dass die Druckrolle nicht mehr zwangsgeführt ist.

Nach einer Fortbildung der Erfindung kann vorgesehen sein, dass das Aktuatorelement mit einem oberen Anlenkbalken der Parallelogrammlenkung an der dem Scharrahmen zugewandten Seite der Parallelogrammlenkung zusammenwirkt. Demnach kann das Aktuatorelement also den Scharrahmen mit dem oberen Lenker einer Parallelogrammlenkung verbinden und diese Verbindung in seiner Länge variabel gestalten. Dies ist von Vorteil für das Bewegen der Druckrolle gegenüber dem Säschar.

Zudem hilft die Kraftbestimmungseinheit bei der Bestimmung des durch die Druckrolle auf den Boden ausgeübten Drucks.

Nach einer weiteren optionalen Modifikation kann vorgesehen sein, dass ein unterer Anlenkbalken der Parallelogrammlenkung der Säscharträger ist, mit dem das Säschar verbunden ist. Dabei kann vorgesehen sein, dass die Druckrolle über einen Druckrollenträger geführt ist, der von einem hinteren Ende des Säscharträgers über ein Schwingenelement abgeht. Das Schwingenelement kann dabei einstückig das hintere Ende des Säscharträgers mit dem oberen Parallelogrammlenker verbinden, so dass bei einem Verändern des Parallelogramms die Druckrolle sich gegenüber dem Säschar bewegt.

Dabei ist nach der Erfindung vorgesehen, dass eine Steuereinheit vorhanden ist, die dazu ausgelegt ist, unter Heranziehung der von der Kraftbestimmungseinheit erfassten Kraft, die auf das Aktuatorelement einwirkt, den von der Druckrolle auf den Ackerboden ausgeübten Druck zu ermitteln. Beispielsweise kann dies durch einen Vergleich des gesamten Schardrucks, der auf den Scharrahmen wirkt, mit der auf das Aktuatorelement wirkenden Kraft geschehen.

Weiter kann nach der Erfindung vorgesehen sein, dass ein zweites Aktuatorelement vorhanden ist, das dazu ausgelegt ist, den Scharrahmen mit dem davon abgehenden Säscharträger in Richtung Ackerboden zu drücken, und wobei ferner die Steuereinheit dazu ausgelegt ist, über eine zweite Kraftbestimmungseinrichtung die auf das zweite Aktuatorelement wirkende Kraft zu erfassen. Dieses zweite Aktuatorelement wird in der Regel als hydraulische Hubanordnung ausgeführt und ist dazu ausgelegt, den ganzen Scharrahmen gegenüber dem Boden zu bewegen.

Vorzugsweise ist die Steuereinheit dazu ausgelegt, auf Grundlage der erfassten Kraft auf das erste Aktuatorelement und der erfassten Kraft auf das zweite Aktuatorelement, einen Rückschluss auf die Verteilung der gesamten Schardruckkraft auf das Säschar und die Druckrolle zu ziehen. Vorteilhafterweise werden hierfür die beiden Druckwerte gleichzeitig abgefragt, so dass eine Bestimmung der Anpresskraft der Druckrolle für einen spezifischen Zeitpunkt erfolgen kann.

Nach der Erfindung ist die Steuereinheit dazu ausgelegt, eine Kalibrierungsphase zu durchlaufen, in der eine Nullkennlinie aufgenommen wird, bei der keine Kraft durch das mindestens eine Säschar auf den Ackerboden aufgebracht wird, so dass der gesamte Schardruck auf die mindestens eine Druckrolle übertragen wird, wobei vorzugsweise die Kalibrierungsphase automatisiert abläuft und das mindestens eine Säschar dabei so eingestellt ist, dass es keine Auflagekräfte überträgt.

Dabei ist zudem die Steuereinheit dazu ausgelegt, beim Feldeinsatz die Nullkennlinie mit einer aktuellen Messlinie zu vergleichen, um dadurch das Kräfteverhältnis des gesamten Schardrucks zu dem Auflagedruck der Druckrolle zu ermitteln.

Ferner kann nach der Erfindung vorgesehen sein, dass die Steuereinheit dazu ausgelegt ist, das Aktuatorelement zum Verstellen der Parallelogrammlenkung in Abhängigkeit eines vorbestimmten Auflagedrucks der Druckrolle zu regeln und/oder zu steuern.

Die Erfindung betrifft zudem eine landwirtschaftliche Maschine, insbesondere ein Scharsystem mit einer Anordnung nach einer der vorhergehend diskutierten Varianten.

Darüber hinaus betrifft die Erfindung ein Verfahren zum Regeln eines Drucks einer einem Säschar nachlaufenden Druckrolle bei einer Anordnung nach einem der vorhergehenden Ansprüche, wobei in dem Verfahren zur Kalibrierung eine Nullkennlinie aufgenommen wird, bei der der gesamte Schardruck der Anordnung auf die mindestens eine Druckrolle übertragen wird, im Feldeinsatz die Nullkennlinie bzw. Kalibrierlinie mit einer aktuellen Kennlinie bzw. Messlinie verglichen wird, um so auf das Kräfteverhältnis von Schardruck zum Auflagedruck
der Druckrolle zu schließen, und eine definierte Andruckkraft als eingesteuerte Regelgröße zur Steuerung entlang der Kennlinie herangezogen wird.

Die Nullkennlinie wird also aufgenommen, um die auf den ersten Aktuator wirkende Kraft zu erhalten, der bei Verändern des zweiten Aktuators, der für den gesamten Schardruck des Scharrahmens verantwortlich ist, zu bestimmen. Dabei wird das mindestens eine Säschar so eingestellt, dass hierüber keine Kraft in den Boden eingeleitet werden kann, so dass nur die Druckrolle für die Krafteinleitung zur Verfügung steht.

Somit erhält man eine Kalibrierungslinie, bei der die gesamte Kraft ausschließlich über die Druckrolle abgeleitet wird. Im Feldeinsatz hingegen ist das mindestens eine Säschar so eingestellt, dass es mit dem Ackerboden in Berührung kommt. Dies führt natürlich dazu, dass bei einer Kraft, die auf den Scharrahmen wirkt, diese nun nicht mehr ausschließlich über die Druckrolle abgeleitet wird, sondern teilweise auch über das mindestens eine Säschar. Erstellt man nun eine Messlinie, analog zur Kalibrierungslinie jedoch nun mit dem mindestens einen Säschar in Bodenkontakt, kann man anhand der Verhältnisse von Mess- und Kalibrierungslinie zurückschließen, wieviel Kraft mittels Säschar und wieviel Kraft mittels der Druckrolle auf den Boden abgegeben wird.

Das Verfahren kann dabei so ausgestaltet sein, dass die Kalibrierung vor dem Feldeinsatz automatisiert abläuft, vorzugsweise unmittelbar vor dem Feldeinsatz auf dem mit der Anordnung zu bearbeitenden Ackerboden. Dazu kann beispielsweise das Säschar automatisch in eine Position verbracht werden, in dem es auch bei einem Herabsenken des Scharrahmens keinen Kontakt mit dem Boden einnimmt.

So kann vorgesehen sein, dass während der Kalibrierung das mindestens eine Säschar in eine negative Ablegeposition verbracht wird, damit es während der Kalibrierung nicht mit dem Boden in Berührung kommt.

Nach einer Fortbildung kann also vorgesehen sein, dass durch den Vergleich des gesamten Schardrucks, vorzugsweise erzeugt durch das zweite Aktuatorelement, mit dem Druck auf das erste Aktuatorelement, das einer jeweiligen Druckrolle zugeordnet ist, mittels einer Differenzialanalyse und/oder eine Kennfeldsteuerung ein Rückschluss gezogen wird, wie sich der gesamte Schardruck anteilsmäßig auf das mindestens eine Säschar und die mindestens eine Druckrolle aufteilt.

Dadurch kann ein Verfahren geschaffen werden, dass auf Grundlage der gewonnen Erkenntnisse, nämlich des aktuellen Anpressdrucks der Druckrolle, den ersten Aktuator so ansteuert, dass ein vorbestimmter und kontinuierlicher Anpressdruck der Druckrolle erhalten wird. Dies führt zu dem gewünschten Effekt, dass die durch die Druckrolle erzeugte Nachverdichtung der Sährille gleichmäßig ohne größere Abweichungen möglich ist, so dass der Prozess eines Einbringens von Saatgut besser und zuverlässiger abläuft.

Die Erfindung betrifft zudem eine landwirtschaftliche Maschine, insbesondere ein Scharsystem mit einer Vorrichtung, die dazu ausgelegt ist, eines der vorhergehenden Verfahren auszuführen.

Weitere Merkmale, Einzelheiten und Vorteile der vorliegenden Erfindung werden anhand der nachfolgenden Figurenbeschreibung ersichtlich. Dabei zeigen:
- Fig. 1:: eine perspektivische Ansicht der erfindungsgemäßen Vorrichtung,
- Fig. 2:: eine Seitenansicht der erfindungsgemäßen Vorrichtung,
- Fig. 3:: eine vergrößerte Seitenansicht der erfindungsgemäßen Vorrichtung mit erläuternden Darstellungen, und
- Fig. 4:: ein Diagramm zur Erläuterung der Kennfeldsteuerung nach der vorliegenden Erfindung.

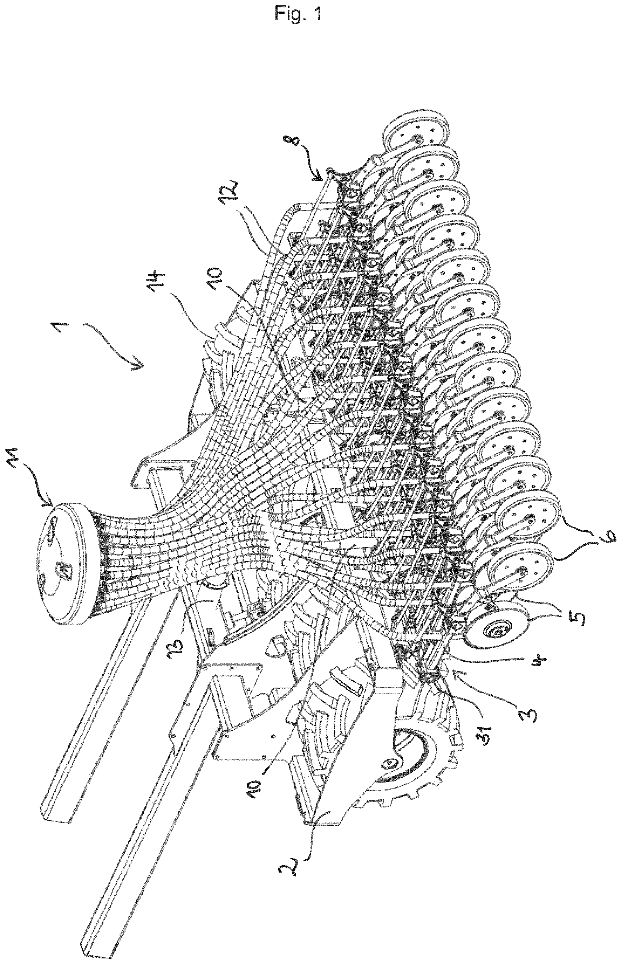

Fig. 1 zeigt eine perspektivische Darstellung eines Teils einer Sämaschine, welche die Vorrichtung 1 nach der Erfindung zeigt. Dargestellt ist eine bspw. durch einen Traktor schleppbare Vorrichtung 1, die über ein in Fig. 1 nicht erkennbares Koppelelement am Tragrahmen 2 mit einer entsprechenden Zugmaschine verbindbar ist. Gestützt wird der Tragrahmen 2 unter anderem von einer Reifenanordnung 14, die aus mehreren nebeneinander angeordneten Reifen besteht. In Fig. 1 sind insgesamt sechs Reifen 14 zum Stützen des Tragrahmens 2 vorgesehen, die abwechselnd zueinander in Antriebsrichtung der Vorrichtung 1 leicht versetzt zueinander angeordnet sind. Für die vorliegende Erfindung ist jedoch auch eine Anordnung der Reifen 14 auf einer gemeinsamen Rotationsachse denkbar.

Der Tragrahmen 2 weist darüber hinaus eine Saatzuführleitung 13 auf, die das in den Ackerboden 7 einzubringende Saatgut bzw. einen zuzuführenden Dünger zu einer Vereinzelungsanlage 11 führt. Dies kann mittels Druckluft oder Saugluft passieren und ist für den Erfolg der vorliegende Erfindung nicht erheblich. Von der Vereinzelungsanlage 11 gehen dabei mehrere Leitungen 12 zum Führen von vereinzeltem Saatgut ab. Jede der Leitungen 12 wirkt dabei mit einem zugehörigen Säschar 5 zusammen, so dass das in der Leitung 12 geführte vereinzelte Saatgut in die durch das Säschar 5 gebildete Furche eingelegt werden kann.

Das Säschar 5 ist dabei durch eine Doppelscheibe umgesetzt, die zwei zueinander spitzwinklig geneigte Säscheiben umfasst, die nach unten hin aufeinander zulaufen. Jede andere Form der Ausgestaltung des Säschars 5 ist aber für den Erfolg der Erfindung ausreichend.

Jedes der Säscharen 5 ist dabei über einen Säscharträger 4 mit einem Scharrahmen 3 verbunden, der höhenverstellbar gegenüber dem Tragrahmen 2 vorgesehen ist, bspw. mittels eines Hydraulikzylinders 10. Der Scharrahmen 3 weist mindestens eine quer zur Fahrtrichtung angeordnete Querachse 31, 32 auf, von der ein Teil oder alle Säscharträger 4 der Vorrichtung 1 abgehen. In der vorliegend in Fig. 1 dargestellten Ausführungsform gibt es zwei in Fahrtrichtung hintereinander angeordnete Säscharreihen 51, 52, wobei jeweils mittig zwischen zwei benachbarten in Fahrtrichtung vorne angeordneten Säscharen 51 ein dazu zurückversetztes Säschar 52 angeordnet ist. Dies erlaubt einen vorteilhaften Querabstand von Säscharen 5 einer Reihe und einen dazu verkleinerten Reihenabstand der Sährillen.

Jeder Säscharträger 4 weist an seinem vom Scharrahmen 3 beabstandeten Ende eine Ankopplung für eine Druckrolle 6 auf, die gelenkig von dem Säscharträger 4 abgeht. Diese kann sich dabei um eine bodenparallele, quer zur Fahrtrichtung orientierte Schwenkachse 84 drehen. Dabei kann vorgesehen sein, dass die Druckrolle 6 in Bodenrichtung vorgespannt ist, so dass bei einem Eindringen des Säschars 5 in den Ackerboden 7 die Druckrolle 6 einen gewissen Anpressdruck auf den Ackerboden ausübt. Die Vorspannung kann mit Hilfe eines in seiner Länge veränderbaren Zylindermechanismus 9 variiert oder ganz aufgehoben werden.

Der Scharrahmen 3 ist dabei über einen zweiten Aktuator 10, bspw. durch eine oder auch mehrere Zylinderanordnungen 10, mit dem Tragrahmen 2 verbunden, so dass je nach Stellung des zweiten Aktuators der Scharrahmen 3 gegenüber dem Tragrahmen 2 abgesenkt oder angehoben werden kann. Dies führt zu einer Anpresskraft der mindestens einen Druckrolle 6 und des mindestens einen Säschars 5, die von der Stellung des zweiten Aktuators abhängig ist.

Darüber hinaus ist es von Vorteil, wenn der zweite Aktuator 10 bzw. die Hubanordnung nicht die einzige Anbindung zwischen dem Scharrahmen 3 und dem Tragrahmen 2 ist, da dies zu einer besonders stabilen und robusten Hubanordnung führen würde, die nicht nur die Verstellkräfte in Höhenrichtung sondern darüber hinaus auch die in Fahrtrichtung wirkenden Schleppkräfte übertragen müsste. Zwar ist dies von der Erfindung umfasst, vorliegend ist aber eine weitere Anbindung des Scharrahmens 3 an dem Tragrahmen 2 möglich, da der Scharrahmen 3 sich in Fahrtrichtung erstreckende Elemente aufweist, die über eine Scharnierverbindung, bspw. durch eine Bolzenverbindung mit dem Tragrahmen 2 befestigt werden können. Verändert man nun die Höhe des Scharrahmens 3 kommt es somit zu einer kreissegmentförmigen Bewegung des Scharrahmens 3 entlang des fixen Anlenkpunkts 33.

Es ist nun der Clou der vorliegenden Erfindung, die Druckrolle 6 parallelogrammgeführt anzulenken und dabei einen Aktuator 9, bspw. einen Hydraulikzylinder vorzusehen, der die auf die Druckrolle 6 wirkende Kraft variieren und/oder erfassen kann. Dies geschieht vorliegend dadurch, dass der obere Parallelogrammlenker 81 über den Aktuator 9 an den unteren Parallelogrammlenker 82, so angelenkt ist, dass sich bei einem Ändern der Länge des Aktuators 9 das Parallelogramm 8 verändert und es zu einer Relativbewegung der Druckrolle 6 gegenüber dem Säschar 5 kommt. Der Aktuator 9 kann sich dabei an dem zum Scharrahmen zugewandten Ende des Parallelogramms 8 befinden, bzw. ist Teil der Parallelogrammführung 8 an dem zum Scharrahmen 3 zugewandten Ende des Parallelogramms 8.

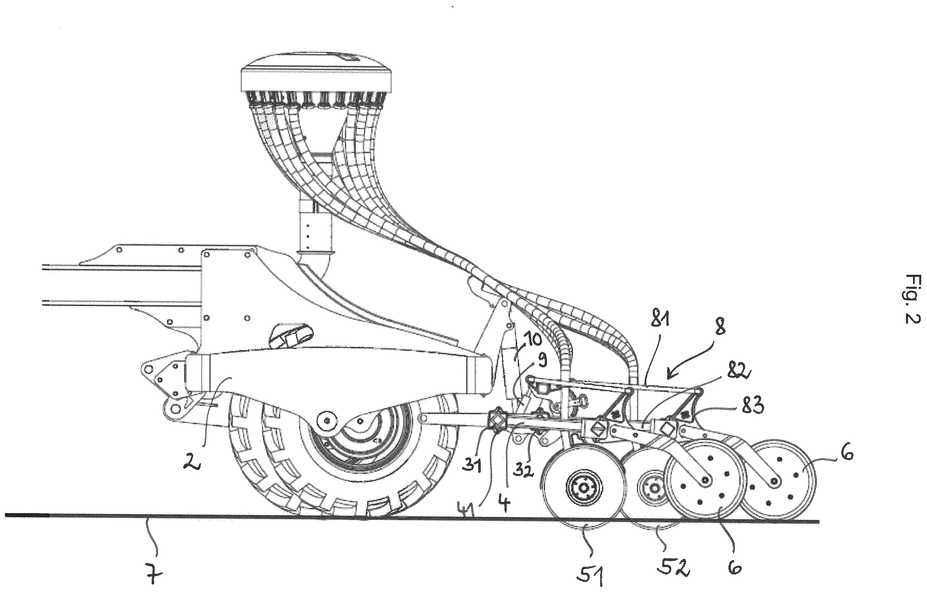

Fig. 2 zeigt dabei eine Seitenansicht der Vorrichtung 1. Man erkennt den Scharrahmen 3, der zwei in Fahrtrichtung der Anordnung zueinander beabstandete, bodenparallele Querachsen 31, 32 aufweist, von denen jeweils die zueinander in Arbeitsrichtung versetzt angeordneten Säscharreihen 51, 52 abgehen. Ein jeder Säscharträger 4 ist dabei mit seiner zugehörigen Querachse 31, 32 gekoppelt, wobei vorgesehen sein kann, dass die Kopplung mit der Querachse 31, 32 elastisch ausgebildet ist, um den Bodenkonturen besser folgen und evtl. Hindernissen wie Steinen ausweichen zu können. Um dies zu erreichen sind die Scharwerkzeuge 5 mittels des Säscharträgers 4 an einer zugehörigen Querachse 31, 32 elastisch, unter Wirkung einer Bodenandruckkraft nachgiebig gelagert, so dass die Scharwerkzeuge 5, wie die in den Figuren dargestellten Säscharen 5 elastisch nach oben ausgelenkt und nach unten zurückgestellt werden können, wenn die Vorrichtung über eine wellige Bodenkontur fährt oder das jeweilige Scharwerkzeug 5 auf einen Stein trifft. Die genannten Säscharträger 4 können dabei mittels Gummiquetschlagern 41 elastisch bzw. beweglich an der Querachse 31, 32 aufgehängt werden, wobei die genannten Gummiquetschlagerelemente in Zwischenräumen zwischen einem Lagerkopf des jeweiligen Säscharträgers 4 und der genannten Querachse 31, 32 angeordnet sein können. Beispielsweise kann ein Säschartragarm-Lagerkopf hülsenförmig die Querachse 31, 32 umgreifen und dabei wie die Querachse 31, 32 einen von der Kreisform abweichenden Querschnitt bzw. eine entsprechende mantelflächenseitige Konturierung umfassen, so dass sich für die Gummiquetschlagerelemente 41 Aufnahmetaschen ergeben, deren Querschnittskontur sich bei Verschwenken bzw. Bewegen der Säscharträger 4 verändern und eine entsprechende Verformung der Gummiquetschlagerelemente 41 implizieren.

Mit einer solchen elastischen Aufhängung mittels Gummiquetschlagerelementen 41 lässt sich eine wartungsfreie Drehlagerung und darüber hinaus auch eine Vorspannung des Systems bewirken. Neben der genannten Wartungsfreiheit ist dabei auch das elastische Verhalten infolge von Seitenkräften, die beispielsweise durch Schrägstellung der Scharscheiben 5 auftreten können, von Vorteil.

Ganz ähnlich kann auch die Anbindung der Druckrolle 6 an dem Säschartragarm 4 an dem vom Scharrahmen 3 abgewandten Ende ausgebildet sein. So kann vorgesehen sein, dass das Ende des Säscharträgers 4 zwei quer zur Fahrtrichtung beabstandete Schenkel aufweist, die ein Achsenelement 84 aufnehmen, das ein mit der Druckrolle 6 verbundenes Schwingenelement 83 umgreift, bspw. in Form einer Gabelkupplung. Das Schwingenelement 83 ist dabei so angeordnet, dass eine Drehbewegung um das Achsenelement 84, das vorzugsweise bodenparallel ausgerichtet ist, möglich ist. Zugleich stellt das Schwingenelement 83 auch eine Verbindung von dem unteren Parallelogrammlenker 82, der in der Figur der Säschartragarm 4 ist, zu dem oberen Parallelogrammlenker 81 her, so dass mit Hilfe des Aktuatorelements 9 eine parallelogrammartige Stützstruktur 8 gebildet ist.

Die Druckrolle 6 ist dabei über einen Druckrollenträger 61 so an das Schwingenelement 83 angebunden, dass bei einem Aus- oder Einfahren des Aktuatorelements 9, das zu einem Verändern des Parallelogramms 8 führt, eine Drehung der Druckrolle 6 um das vom Säscharträger 4 geführte Achsenelement 84 erfolgt. Dies führt zu einer Relativbewegung der Druckrolle 6 gegenüber dem Säschar 5 in Abhängigkeit einer Stellung des Aktuatorelements 9.

Für ein Bewegen des gesamten Scharrahmens 3 ist eine Hubanordnung 10 vorgesehen, die den Scharrahmen 3 und sämtliche damit verbundene Elemente vom Boden 7 abheben oder in Bodenrichtung drücken kann. Das Ausfahren dieser zentralen Hubanordnung 10 führt in der Regel zu einem Bewegen des Scharrahmens 3 in Bodenrichtung wohingegen das Einfahren der Hubanordnung 10 zu einem Bewegen in die entgegengesetzte Richtung vom Boden 7 weg führt.

Man erkennt, dass die Stellung des in dem Parallelogramm 8 angeordneten Aktuatorelements 9 Auswirkungen auf den Anpressdruck der Druckrolle 6 auf den Boden 7 besitzt, da das Aktuatorelement 9 über einen Umlenkmechanismus 85 an dem Säscharträger 4 angebunden ist, der bei einem Ausfahren des Aktuatorelements 9 zu einem flacher werdenden Parallelogramm 8 führt, bei dem der obere Parallelogrammlenker 81 nach hinten, also entgegen der Arbeitsrichtung der Anordnung 1, bewegt wird. Dies führt zu einem Verschwenken der Druckrolle 6 nach unten in Richtung Boden 7, so dass der Anpressdruck bei Bodenkontakt erhöht wird.

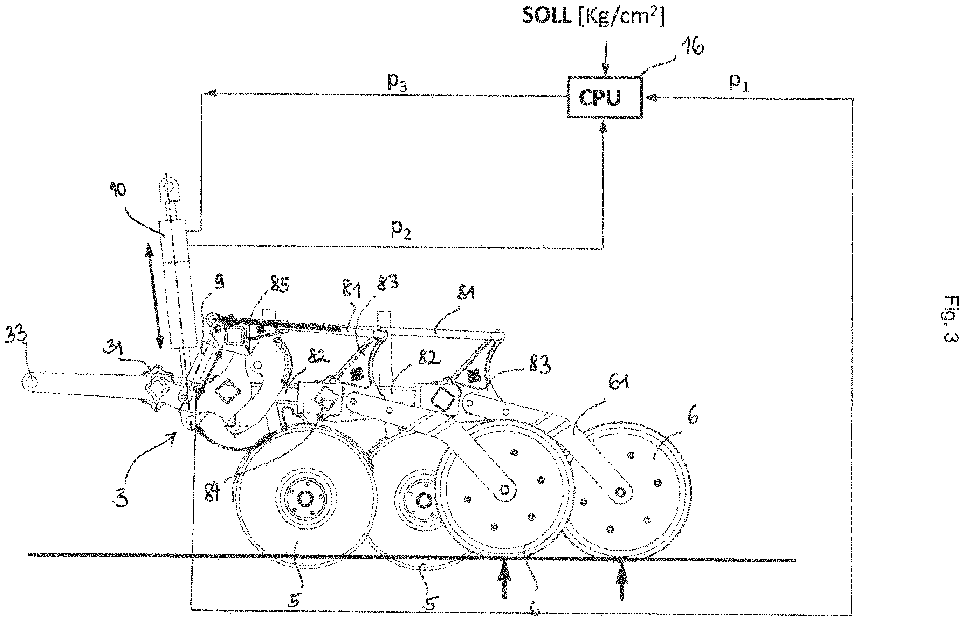

Wie man der Fig. 3 entnehmen kann, ist das Aktuatorelement 9 auch mit einer Kraftbestimmungseinheit 15 versehen, die die auf das Aktuatorelement 9 einwirkende Kraft bestimmen kann. Somit ist es möglich, den von der Kraftbestimmungseinheit 15 erhaltenen Messwert P₁ einer Steuereinheit 16 zukommen zu lassen. Dies kann bei Umsetzung des Aktuatorelements 9 durch einen Druckzylinder ein Druckwert P₁ sein. Auch die Hubanordnung 10, die ebenfalls durch einen Druckzylinder umgesetzt werden kann und zum Verstellen des gesamten Scharrahmens 3 dient, kann seinen Solldruck P₃ und seinen Istdruck P₂ an die Steuereinheit 16 weitergeben, damit diese den tatsächlichen Anpressdruck der Druckrolle 6 steuern bzw. regeln kann.

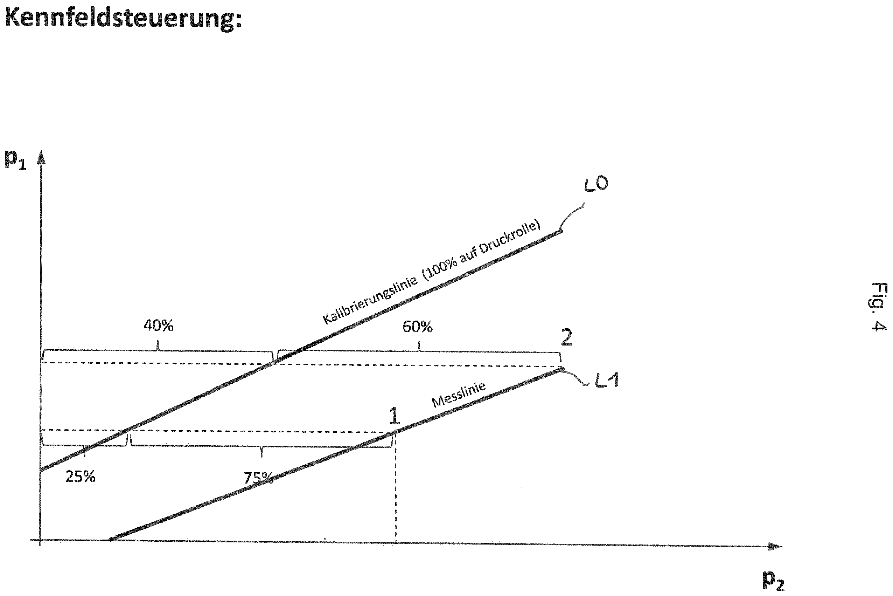

Anhand einer in Fig. 4 dargestellten Kennfeldsteuerung wird eine mögliche Umsetzung der Steuerung ersichtlich. Hierfür ist erforderlich, dass vor einem Einsatz der Anordnung zunächst eine Kalibrierungslinie L0 aufgenommen wird, bei der die auf die Druckrolle 6 wirkende Kraft bei einem Hub der Hubanordnung 10 zum Bewegen des gesamten Scharrahmens 3 erfasst wird. Dabei ist darauf zu achten, dass währenddessen kein Säschar 5 mit dem Boden 7 in Kontakt kommt und die gesamte Kraft über die Druckrolle 6 in den Boden eingeleitet wird. Die dabei erhaltene Kennlinie L0 beschreibt also einen Zusammenhang zwischen der gesamten auf den Scharrahmen 3 wirkenden Kraft und der dabei auf die Druckrolle 6 wirkenden Kraft.

Wird dabei also keine Kraft auf den Scharrahmen 3 angelegt, ist die Hubanordnung 10 also bspw. kraftlos, erkennt man, dass für einen Wert P₂=0 das Gewicht des Scharrahmens 3 und der daran angeordneten Elemente auf der Druckrolle 6 lastet, so dass für den Wert P₂=0 der Wert von P₁≠0 ist. Mit einem Anstieg von P₂, also einem aktiven Bewegen des Scharrrahmens 3 in Richtung Boden 7 steigt demnach der Druck auf den im Parallelogramm 8 angeordneten Aktuator 9, wie man anhand des Verlaufs von P₁ erkennen kann. Selbiges gilt auch für P₂, da die auf die Hubanordnung 10 zum Bewegen des Scharrahmens 3 wirkende Kraft selbstverständlich auch ansteigt.

Ein jeder Punkt auf der Kalibrierungslinie L0 entspricht daher einem unterschiedlichen Druckwert der Hubanordnung 10 und zeigt das aktuelle Verhältnis der Kräfte, die auf den Aktuator 9 im Parallelogramm 8 und die Hubanordnung 10 einwirken.

Im Feldeinsatz werden nun die jeweiligen Säschare 5 so angeordnet, dass sie auch mit dem Boden 7 in Berührung kommen und ihre bestimmungsgemäße Aufgabe übernehmen können. Hierbei ergibt sich dann die von der Kalibrierungslinie L0 unterschiedliche Messlinie L1, da nun nicht mehr der gesamte Druck, der durch die Hubanordnung 10 auf den Scharrahmen 3 gebracht wird, allein auf der mindestens eine Druckrolle 6 lastet, sondern auch auf dem mindestens einem Säschar 5.

Ist nun das Säschar 5 in seine bestimmungsgemäße Anordnungsposition verbracht worden, führt dies dazu, dass der Druck P₁ auf den im Parallelogramm 8 angeordneten Aktuator 9 nicht bereits sofort mit einer Bewegung des Scharrahmens 3 in Bodenrichtung ansteigt, da nun die Kraft zuerst über das mindestens eine Säschar 5 abgeleitet wird. Erst nachdem das mindestens eine Säschar 5 in den Boden 7 genügend tief eingetaucht ist, kommt die mindestens eine Druckrolle 6 in Bodenkontakt, so dass auch erst dann der Druck hierauf ansteigt.

Im Feldeinsatz wird nun diese Kalibrierungslinie L0 mit der aktuellen Messlinie L1 verglichen. Dadurch kann dann immer das Kräfteverhältnis von Schardruck des mindestens einen Säschars 5 zum Auflagedruck der mindestens einen Druckrolle 6 ermittelt werden. Damit kann nun eine definierte Andruckkraft an der Druckrolle 6 als eingesteuerte Regelgröße für die Kennfeldsteuerung herangezogen werden. Die Einhaltung der gewünschten Ablagetiefe ergibt sich dabei, durch die Ermittlung von Auflagedrücken < 0 an der Druckrolle 6.

Durch den Vergleich zweier zeitgleich aufgenommener Hydraulikdrücke, nämlich den zentralen Schardruck P₁ und dem Druck P₂ zur Abstützung des oberen Prallelogrammlenkeranlenkbalkens 81 nach vorne kann durch eine Differenzanalyse bzw. durch die sogenannte Kennfeldsteuerung ein Rückschluss getroffen werden, wie sich die gesamte Schardruckkraft anteilsmäßig auf das mindestens eine Säschar 5 und die Andruckrolle 6 aufteilt.

Betrachtet man den auf der Messlinie liegenden Arbeitspunkt 1 in der Fig. 4, so kommt man zu dem Ergebnis, dass 75% der von der Hubanordnung 10 aufgebrachten Kraft auf dem mindestens einen Säschar 5 und der Rest auf der mindestens einen Druckrolle 6 lasten.

Bei dem Arbeitspunkt 2 hingegen lasten hingegen nur 60% der von der Hubanordnung 10 aufgebrachten Kraft auf dem mindestens einen Säschar 5 und der Rest auf der mindestens einen Druckrolle 6.

Durch eine entsprechende Ansteuerung des Aktuators 9 kann somit ein vorbestimmter Anpressdruck der Druckrolle 6 gewährleistet werden.

## Patentansprüche

1. Säscharanordnung (1), insbesondere an einer Sämaschine, umfassend:
mindestens ein Säschar (5) zum Bilden einer Furche in einem Ackerboden (7),
mindestens eine Druckrolle (6), die in Arbeitsrichtung der Säscharanordnung (1) hinter dem Säschar (5) angeordnet und dazu ausgelegt ist, mit Druck auf dem Ackerboden (7) abzurollen, und
einen Säscharträger (4), der von einem Scharrahmen (3) abgeht und mit dem Säschar (5) und der Druckrolle (6) verbunden ist, wobei
die Druckrolle (6) mittels einer Parallelogrammlenkung (8) verstellbar gegenüber dem Säschar (5) gehaltert ist,
ein Aktuatorelement (9) zum Verstellen der Parallelogrammlenkung (8) und zum Ausüben einer hieraus resultierenden Bewegung der Druckrolle (6) gegenüber dem Säschar (5),
eine Kraftbestimmungseinheit (15) zum Erfassen der auf das Aktuatorelement (9) einwirkenden Kraft, und
eine Steuereinheit zum Ermitteln des von der Druckrolle (6) auf den Ackerboden (7) ausgeübten Drucks unter Heranziehung der von der Kraftbestimmungseinheit (15) erfassten Kraft, die auf das Aktuatorelement (9) einwirkt,
**dadurch gekennzeichnet, dass**
die genannte Steuereinheit (16) dazu ausgelegt ist, eine Kalibrierungsphase zu durchlaufen, in der eine Nullkennlinie (L0) aufgenommen wird, bei der keine Kraft durch das mindestens eine Säschar (5) auf den Ackerboden (7) aufgebracht wird, so dass der gesamte Schardruck auf die mindestens eine Druckrolle (6) übertragen wird, wobei die Steuereinheit (16) dazu ausgelegt ist, beim Feldeinsatz die Nullkennlinie (L0) mit einer aktuellen Messlinie (L1) zu vergleichen, um dadurch das Kräfteverhältnis des gesamten Schardrucks zu dem Auflagedruck der Druckrolle (6) an einem Arbeitspunkt zu ermitteln.

2. Anordnung (1) nach Anspruch 1, wobei das Aktuatorelement (9) mit einem oberen Anlenkbalken (81) der Parallelogrammlenkung (8) an der dem Scharrahmen (3) zugewandten Seite der Parallelogrammlenkung (8) zusammenwirkt.

3. Anordnung (1) nach einem der vorhergehenden Ansprüche, wobei ein unterer Anlenkbalken (82) der Parallelogrammlenkung (8) der Säscharträger (4) ist, mit dem das Säschar (5) verbunden ist.

4. Anordnung (1) nach einem der vorhergehenden Ansprüche, wobei ein zweites Aktuatorelement (10) vorhanden ist, das dazu ausgelegt ist, den gesamten Scharrahmen (3) mit dem davon abgehenden Säscharträger (4) in Richtung Ackerboden (7) zu drücken, und wobei ferner die Steuereinheit (16) dazu ausgelegt ist, über eine zweite Kraftbestimmungseinheit (17) die auf das zweite Aktuatorelement (10) wirkende Kraft zu erfassen.

5. Anordnung (1) nach dem vorhergehenden Anspruch, wobei die Steuereinheit (16) dazu ausgelegt ist, auf Grundlage der erfassten Kraft (P₁) auf das erste Aktuatorelement (9) und der erfassten Kraft (P₂) auf das zweite Aktuatorelement (10), einen Rückschluss auf die Verteilung der gesamten Schardruckkraft auf das Säschar (5) und die Druckrolle (6) zu ziehen.

6. Anordnung (1) nach einem der vorhergehenden Ansprüche, wobei die Steuereinheit (16) derart ausgelegt ist, dass die Kalibrierungsphase automatisiert abläuft und das mindestens eine Säschar (5) dabei so eingestellt ist, dass es keine Auflagekräfte überträgt.

7. Anordnung (1) nach einem der vorhergehenden Ansprüche, wobei die Steuereinheit (16) dazu ausgelegt ist, das Aktuatorelement (9) zum Verstellen der Parallelogrammlenkung (8) in Abhängigkeit eines vorbestimmten Auflagedrucks der Druckrolle (6) zu regeln.

8. Landwirtschaftliche Maschine, insbesondere Scharsystem mit einer Anordnung (1) nach einem der vorhergehenden Ansprüche.

9. Verfahren zum Regeln eines Drucks einer einem Säschar (5) nachlaufenden Druckrolle (6) bei einer Säscharanordnung (1), die nach einem der vorhergehenden Ansprüche ausgebildet ist, wobei in dem Verfahren:
von der Kraftbestimmungseinheit (15) die auf das Aktuaturelement (9) einwirkende Kraft bestimmt wird,
zur Kalibrierung von der Steuereinheit (16) der genannten Anordnung (1) eine Nullkennlinie (L0) aufgenommen wird, bei der der gesamte Schardruck der Anordnung (1) auf die mindestens eine Druckrolle (6) übertragen wird,
im Feldeinsatz die Nullkennlinie (L0) von der genannten Steuereinheit (16) mit einer aktuellen Kennlinie (L1) verglichen wird, um so auf das Kräfteverhältnis von Schardruck zum Auflagedruck der Druckrolle (6) zu schließen, und
eine definierte Andruckkraft als eingesteuerte Regelgröße zur Steuerung entlang der Kennlinie herangezogen wird.

10. Verfahren nach Anspruch 9, wobei die Kalibrierung vor dem Feldeinsatz automatisiert abläuft, vorzugsweise unmittelbar vor dem Feldeinsatz auf dem mit der Anordnung (1) zu bearbeitenden Ackerboden (7).

11. Verfahren nach einem der Ansprüche 9 oder 10, wobei während der Kalibrierung das mindestens eine Säschar (5) in eine negative Ablegeposition verbracht wird, damit es während der Kalibrierung nicht mit dem Boden (7) in Berührung kommt.

12. Verfahren nach einem der vorhergehenden Ansprüche 9 bis 11, wobei durch den Vergleich des gesamten Schardrucks, vorzugsweise erzeugt durch das zweite Aktuatorelement (9), mit dem Druck auf das erste Aktuatorelement (9), das einer jeweiligen Druckrolle (6) zugeordnet ist, mittels einer Differenzialanalyse und/oder eine Kennfeldsteuerung ein Rückschluss gezogen wird, wie sich der gesamte Schardruck anteilsmäßig auf das mindestens eine Säschar (5) und die mindestens eine Druckrolle (6) aufteilt.

## Claims

1. Drill coulter assembly (1), in particular a seed drill, comprising:
at least one drill coulter (5) for forming a furrow in soil (7),
at least one pressure roller (6), which is arranged behind the drill coulter (5) in the working direction of the drill coulter assembly (1) and is designed to roll with pressure on the soil (7), and
a drill coulter carrier (4) which extends from a coulter frame (3) and is connected to the drill coulter (5) and the pressure roller (6), wherein
the pressure roller (6) is mounted adjustably relative to the drill coulter (5) by means of a parallelogram linkage (8),
an actuator element (9) for adjusting the parallelogram linkage (8) and for exerting a resulting movement of the pressure roller (6) relative to the drill coulter (5),
a force determination unit (15) for detecting the force acting on the actuator element (9), and
a control unit for determining the pressure exerted by the pressure roller (6) on the soil (7) using the force detected by the force determination unit (15), which acts on the actuator element (9),
**characterised in that**
said control unit (16) is designed to run through a calibration phase in which a zero characteristic curve (L0) is recorded, in which no force is applied to the soil (7) by the at least one drill coulter (5), so that the entire coulter pressure is transmitted to the at least one pressure roller (6), wherein the control unit (16) is designed to compare the zero characteristic curve (L0) with a current measurement curve (L1) during field operation in order to thereby determine the force ratio of the total coulter pressure to the contact pressure of the pressure roller (6) at a working point.

2. Assembly (1) according to claim 1, wherein the actuator element (9) cooperates with an upper linkage beam (81) of the parallelogram linkage (8) on the side of the parallelogram linkage (8) facing the coulter frame (3).

3. Assembly (1) according to any one of the preceding claims, wherein a lower linkage beam (82) of the parallelogram linkage (8) is the drill coulter carrier (4) to which the drill coulter (5) is connected.

4. Assembly (1) according to any one of the preceding claims, wherein a second actuator element (10) is provided, which is designed to push the entire coulter frame (3) with the coulter beam (4) extending from it towards the ground (7), and wherein furthermore the control unit (16) is designed to detect the force acting on the second actuator element (10) via a second force determination unit (17).

5. Assembly (1) according to any one of the preceding claims, wherein the control unit (16) is designed to deduce the distribution of the total coulter pressure force on the drill coulter (5) and the pressure roller (6) on the basis of the detected force (P₁) on the first actuator element (9) and the detected force (P₂) on the second actuator element (10).

6. Assembly (1) according to any one of the preceding claims wherein the control unit (16) is designed such that the calibration phase runs automatically and the at least one drill coulter (5) is set such that it does not transmit any contact forces.

7. Assembly (1) according to any one of the preceding claims, wherein the control unit (16) is designed to control the actuator element (9) for adjusting the parallelogram linkage (8) as a function of a predetermined contact pressure of the pressure roller (6).

8. Agricultural machine, in particular a coulter system having an assembly (1) according to any one of the preceding claims.

9. Method for controlling a pressure of a pressure roller (6) following a drill coulter (5) in a drill coulter assembly (1) formed according to any one of the preceding claims, wherein in the method:
the force acting on the actuator element (9) is determined by the force determination unit (15),
a zero characteristic curve (L0) is recorded by the control unit (16) of said assembly (1) for calibration, in which the entire coulter pressure of the assembly (1) is transmitted to the at least one pressure roller (6),
in field operation, the zero characteristic curve (L0) is compared by said control unit (16) with a current characteristic curve (L1) in order to deduce the force ratio of the coulter pressure to the contact pressure of the pressure roller (6), and
a defined contact pressure force is used as a controlled variable for control along the characteristic curve.

10. Method according to claim 9, wherein the calibration is carried out automatically before field operation, preferably immediately before field operation on the soil (7) to be worked with the assembly (1).

11. Method according to any one of claims 9 or 10, wherein during calibration the at least one drill coulter (5) is moved to a negative storage position so that it does not come into contact with the soil (7) during calibration.

12. Method according to any one of claims 9 to 11, wherein by comparing the total coulter pressure, preferably generated by the second actuator element (9), with the pressure on the first actuator element (9), which is assigned to a respective pressure roller (6), it is deduced by means of a differential analysis and/or a characteristic mapping control how the total coulter pressure is divided proportionally between the at least one drill coulter (5) and the at least one pressure roller (6).

## Revendications

1. Agencement de soc de semoir (1), en particulier sur un semoir, comprenant :
au moins un soc de semoir (5) destiné à former un sillon dans une terre arable (7),
au moins une roue plombeuse (6) qui est disposée derrière le soc de semoir (5) dans le sens de travail de l'agencement de soc de semoir (1) et qui est conçue pour rouler avec application d'une pression sur la terre arable (7), et
un support de soc de semoir (4) qui part d'un cadre de soc (3) et qui est relié au soc de semoir (5) et à la roue plombeuse (6), dans lequel
la roue plombeuse (6) est retenue de manière réglable par rapport au soc de semoir (5) au moyen d'une tringlerie en parallélogramme (8),
un élément actionneur (9) destiné à régler la tringlerie en parallélogramme (8) et à exécuter un mouvement en résultant de la roue plombeuse (6) par rapport au soc de semoir (5),
une unité de détermination de force (15) destinée à détecter la force agissant sur l'élément actionneur (9), et
une unité de commande destinée à déterminer la pression exercée par la roue plombeuse (6) sur la terre arable (7) en tenant compte de la force, détectée par l'unité de détermination de force (15), qui agit sur l'élément actionneur (9),
**caractérisé en ce que**
ladite unité de commande (16) est conçue pour effectuer une phase de calibrage, dans laquelle une caractéristique zéro (L0) est enregistrée, pour laquelle aucune force n'est appliquée par l'au moins un soc de semoir (5) sur la terre arable (7), de telle sorte que la totalité de la pression du soc est transmise à l'au moins une roue plombeuse (6), l'unité de commande (16) étant conçue pour, lors de l'utilisation dans le champ, comparer la caractéristique zéro (L0) à une ligne de mesure (L1) actuelle pour déterminer ainsi le rapport des forces de la totalité de la pression du soc par rapport à la pression d'appui de la roue plombeuse (6) sur un point de travail.

2. Agencement (1) selon la revendication 1, dans lequel l'élément actionneur (9) coopère avec une barre articulée supérieure (81) de la tringlerie en parallélogramme (8) sur le côté de la tringlerie en parallélogramme (8) orienté vers le cadre de soc (3).

3. Agencement (1) selon l'une des revendications précédentes, dans lequel une barre articulée inférieure (82) de la tringlerie en parallélogramme (8) est le support de soc de semoir (4) auquel le soc de semoir (5) est relié.

4. Agencement (1) selon l'une des revendications précédentes, dans lequel il y a un second élément actionneur (10) qui est conçu pour pousser la totalité du cadre de soc (3) avec le support de soc de semoir (4) partant de celui-ci en direction de la terre arable (7), et dans lequel en outre l'unité de commande (16) est conçue pour détecter la force agissant sur le second élément actionneur (10) par le biais d'une seconde unité de détermination de force (17).

5. Agencement (1) selon la revendication précédente, dans lequel l'unité de commande (16) est conçue pour déduire de la force détectée (P₁) sur le premier élément actionneur (9) et de la force détectée (P₂) sur le second élément actionneur (10) la répartition de la totalité de la force de pression du soc entre le soc de semoir (5) et la roue plombeuse (6).

6. Agencement (1) selon l'une des revendications précédentes, dans lequel l'unité de commande (16) est conçue de telle manière que la phase de calibrage se déroule de manière automatisée et l'au moins un soc de semoir (5) est alors réglé de telle manière qu'il ne transmet aucune force d'appui.

7. Agencement (1) selon l'une des revendications précédentes, dans lequel l'unité de commande (16) est conçue pour réguler l'élément actionneur (9) afin de régler la tringlerie en parallélogramme (8) en fonction d'une pression d'appui prédéterminée de la roue plombeuse (6).

8. Machine agricole, en particulier système de soc doté d'un agencement (1) selon l'une des revendications précédentes.

9. Procédé de régulation d'une pression d'une roue plombeuse (6) suivant un soc de semoir (5) dans un agencement de soc de semoir (1) qui est réalisé selon l'une des revendications précédentes, dans lequel, dans le procédé :
la force agissant sur l'élément actionneur (9) est déterminée par l'unité de détermination de force (15),
pour le calibrage, l'unité de commande (16) dudit agencement (1) enregistre une caractéristique zéro (L0), pour laquelle la totalité de la pression du soc de l'agencement (1) est transmise à l'au moins une roue plombeuse (6),
lors de l'utilisation dans le champ, la caractéristique zéro (L0) est comparée à la caractéristique actuelle (L1) par ladite unité de commande (16), afin de déduire ainsi le rapport des forces entre la pression du soc et la pression d'appui de la roue plombeuse (6) et
une poussée définie est prise en compte comme grandeur de réglage commandée pour la commande le long de la caractéristique.

10. Procédé selon la revendication 9, dans lequel le calibrage se déroule de manière automatisée avant l'utilisation dans le champ, de préférence directement avant l'utilisation dans le champ, sur la terre arable (7) à travailler avec l'agencement (1).

11. Procédé selon l'une des revendications 9 ou 10, dans lequel, pendant le calibrage, l'au moins un soc de semoir (5) est amené dans une position de rangement négative afin qu'il ne vienne pas en contact avec la terre (7) pendant le calibrage.

12. Procédé selon l'une des revendications précédentes 9 à 11, dans lequel, par la comparaison de la totalité de la pression du soc, de préférence générée par le second élément actionneur (9), à la pression sur le premier élément actionneur (9), qui est associé à une roue plombeuse (6) respective, on déduit, au moyen d'une analyse différentielle et/ou d'une définition des réseaux de caractéristiques, comment la totalité de la pression du soc se répartit proportionnellement entre l'au moins un soc de semoir (5) et l'au moins une roue plombeuse (6).
